# EUROPÄISCHE PATENTSCHRIFT

(11) **EP 4 283 838 B1**
(45) Veröffentlichungstag und Bekanntmachung des Hinweises auf die Patenterteilung: **12.03.2025**
(21) Anmeldenummer: 23174315.4
(22) Anmeldetag: 19.05.2023
(51) Int. Cl.: H02K 1/30, H02K 15/02, H02K 15/03, H02K 15/12

(54) **ROTORAUFNAHME ZUR HERSTELLUNG EINER VERBINDUNG EINER WELLE MIT EINEM ROTORBLECHPAKET FÜR EINEN ROTOR EINES INNENLÄUFERMOTORS**
ROTOR HOLDER FOR PRODUCING A CONNECTION OF A SHAFT TO A LAMINATED ROTOR CORE FOR A ROTOR OF AN INTERNAL ROTOR MOTOR
LOGEMENT DE ROTOR POUR ÉTABLIR UNE LIAISON D'UN ARBRE AVEC UN PAQUET DE TÔLES DE ROTOR POUR UN ROTOR D'UN MOTEUR À ROTOR INTERNE

(30) Priorität: 23.05.2022 DE 102022112940
(43) Veröffentlichungstag der Anmeldung: 29.11.2023
(73) Patentinhaber: ebm-papst Landshut GmbH, 84030 Landshut (DE)
(72) Erfinder: WELTZER, Jan, 84036 Landshut (DE); MLINEK, Manuel, 84032 Landshut (DE)
(74) Vertreter: Staeger & Sperling Partnerschaftsgesellschaft mbB

(56) Entgegenhaltungen:
- EP-B1- 1 458 510
- CN-U- 202 840 720
- JP-A- 2000 125 523
- JP-A- 2000 166 194
- US-A1- 2015 180 293

## Beschreibung

Die Erfindung betrifft eine Rotoraufnahme zur Herstellung einer Verbindung zwischen Welle und Rotorblechpaket, ein System aus einer Rotoraufnahme und einem Rotor bzw. einem Rotorblechpaket, ein Verfahren zur Herstellung einer Rotoraufnahme sowie ein Verfahren zur Herstellung einer solchen Verbindung mit einer Rotoraufnahme.

Aus dem Stand der Technik ist eine Vielzahl von verschiedenen Vorrichtungen und Verfahren zur Herstellung einer Welle-Rotor-Verbindung für Motoren und insbesondere Innenläufermotoren bekannt. So sind Rotoraufnahmen, Systeme mit Rotoraufnahmen sowie auch Aspekte von Rotoraufnahmen beispielsweise aus den Schriften JP 2000 166194 A, US 2015/180293 A1, CN 202 840 720 U, EP 1 458 510 B1 und JP 2000 125523 A bekannt.

Bei Innenläufermotoren durchläuft die Welle den Rotor bzw. das Rotorblechpaket konzentrisch zur Rotationsachse, wobei diese teilweise eingepresst oder eingeklebt werden kann.

Ist stattdessen vorgesehen, dass die Verbindung zwischen Rotorblechpaket und Welle durch Kunststoffeinspritzung gebildet wird, greift das Werkzeug zur Einspritzung des Kunststoffs das Rotorblechpaket an einem Außenumfang, was in mehrfacher Hinsicht nachteilhaft ist.

Zunächst wird der Kunststoff im Bereich der Rotationsachse eingespritzt, sodass der Ort der Kunststoffeinspritzung und der Bereich der Fixierung des Rotorblechpakets am Werkzeug vergleichsweise weit auseinanderliegen. Dadurch kommt es zu einer Vielzahl von Toleranzketten und am Ort der Einspritzung selbst zu möglicherweise großen Abweichungen, durch welche die Welle unter Umständen nicht mehr konzentrisch zu der Rotationsachse in dem Rotorblechpaket angeordnet ist. Eine große Unwucht und schlechte Laufeigenschaften sind die Folge.

Hinzukommt, dass die Bleche bzw. Rotorbleche, durch welche das Rotorpaket bzw. das Rotorblechpaket des Rotors gebildet ist, der Fixierung an dem Werkzeug an ihrem Außenumfang standhalten müssen und daher auf die auftretenden Belastungen ausgelegt sein müssen. Entsprechend sind nicht alle und insbesondere keine filigranen Konturen und Querschnitte für die Rotorbleche möglich, was den Gestaltungsfreiraum der Rotorbleche stark einschränkt.

Der Erfindung liegt deshalb die Aufgabe zugrunde, die vorgenannten Nachteile zu überwinden und eine Rotoraufnahme für ein Spritzwerkzeug zur Herstellung einer Wellen-Rotor-Verbindung in einem Rotor für einen Innenläufermotor sowie ein System umfassend eine solche Rotoraufnahme sowie zugehörige Verfahren bereitzustellen, durch welche auf einfache und kostengünstige Weise eine Welle-Rotor-Verbindung mit hoher Maßgenauigkeit herstellbar ist.

Diese Aufgabe wird durch die Merkmalskombination gemäß Patentanspruch 1 gelöst.

Erfindungsgemäß wird daher eine Rotoraufnahme für ein Spritzwerkzeug zur Herstellung einer Verbindung einer Welle mit einem Rotorblechpaket vorgeschlagen. Dabei bestimmt das Rotorblechpaket entlang seiner Rotationsachse ein Durchgangsloch zur Aufnahme der Welle. Das Rotorblechpaket bzw. die Einheit aus Rotorblechpaket und Welle bilden insbesondere einen Teil eines Rotors für einen Innenläufermotor. Die Rotoraufnahme weist zwei Halteabschnitte auf. Zumindest einer der Halteabschnitte weist ein freies Ende mit einer radialäußeren erste Passfläche auf, welche zu einer Innenfläche des Rotors korrespondiert bzw. ausgebildet ist, zu dieser zu korrespondieren. Die Innenfläche des Rotorblechpakets kann zumindest abschnittsweise ein das Rotorblechpaket entlang der Rotationsachse durchlaufendes Durchgangsloch zur Aufnahme der Welle bestimmen. Zumindest einer der Halteabschnitte ist ausgebildet, konzentrisch zu der Rotationsachse in das Rotorblechpaket eingesteckt zu werden und das Rotorblechpaket vorzugsweise ausschließlich über die erste Passfläche konzentrisch an zumindest einem der Halteabschnitte zu halten. Weiter bildet zumindest einer der Halteabschnitte einen Aufnahmeraum zur Aufnahme der Welle aus und weist in dem Aufnahmeraum eine radialinnere zweite Passfläche auf, welche zu einer Außenfläche der Welle korrespondiert bzw. ausgebildet ist zu dieser zu korrespondieren. Entsprechend ist zumindest einer der Halteabschnitte ausgebildet, die Welle an der zweiten Passfläche konzentrisch zu der Rotationsachse und sich zumindest abschnittsweise in das Rotorblechpaket erstreckend zu halten. Zumindest einer der Halteabschnitte ist zudem ausgebildet, das Durchgangsloch, welches das Rotorblechpaket durchläuft, insbesondere in Richtung der Rotationsachse zumindest einseitig und zumindest abschnittsweise zu verschließen und einen in dem Rotorblechpaket durch das Durchgangsloch gebildeten Hohlraum zu begrenzen.

Vorzugsweise wird das Durchgangsloch in Radialrichtung zu der Rotationsachse durch das Rotorblechpaket und in Axialrichtung entlang der Rotationsachse durch zumindest einen der Halteabschnitte verschlossen. Da in dem Durchgangsloch die Welle angeordnet werden kann, wird der Hohlraum in dem Durchgangsloch zudem ein nach radialinnen durch die Welle begrenzt, in welchen dann ein die Welle mit dem Rotorblechpakete verbindenes Material einspritzbar ist.

Vorliegend ist darauf hinzuweisen, dass das Rotorblechpaket auch als Blechpaket oder Rotorpaket bezeichnet werden kann, welches aus einer Vielzahl von einander anliegenden Rotorblechen gebildet wird. Der aus Rotorblechpaket und Welle gebildete Gegenstand kann zudem als Rotor bezeichnet werden, wobei dieser auch weitere Komponenten aufweisen kann. Die das Rotorblechpaket bildenden Rotorbleche können verschiedene Geometrien aufweisen und dadurch gegebenenfalls die im Weiteren noch beschriebenen Flächen, Abschnitte und Abflachungen bilden.

Eine vorteilhafte Weiterbildung sieht vor, dass zumindest einer der Halteabschnitte einen Kanal zum Einspritzen eines beim Einspritzen flüssigen Kunststoffs in den Hohlraum ausbildet. Da zumindest einer der Halteabschnitte, wie nachfolgend erläutert, durch eine Hülse gebildet wird, kann sich der Kanal beispielsweise von einer am Außenumfang der zumindest einen Hülse an die erste Passfläche angrenzenden Bereich zu einer Stirnseite der Hülse erstrecken, welche in dem Rotorblechpaket anordenbar ist. Wird einer der Halteabschnitte durch das Spritzwerkzeug gebildet, kann dieses auch integral einen solchen Kanal vorsehen. Die Hülse bzw. das Spritzwerkzeug kann dabei auch mehrere solche Kanäle aufweisen. Sind zwei Hülsen vorgesehen kann auch jede der Hülsen jeweils einen oder mehrere Kanäle aufweisen. Vorzugsweise wird das Spritzwerkzeug durch zwei Werkzeughälften gebildet, welche jeweils einen Halteabschnitt aufweisen, wobei dann auch jede der Werkzeughälften jeweils einen oder mehrere Kanäle aufweisen können.

Sofern ein anderes Material als Kunststoff geeignet ist, kann auch ein anderes beim Einspritzen flüssiges und in dem Hohlraum aushärtendes Material durch den Kanal eingespritzt werden bzw. dieser hierfür vorgesehen sein.

Vorteilhaft ist zudem eine Variante, bei welcher die erste Passfläche einen unmittelbar an eine Stirnseite zumindest eines der Halteabschnitte angrenzenden Abschnitt einer Außenfläche des Halteabschnitts bestimmt. Zusätzlich oder alternativ, kann die zweite Passfläche in Längsrichtung zumindest eines der Halteabschnitte einseitig oder beidseitig von abgesetzten Innenflächen des Halteabschnitts benachbart sein, sodass also die zweite Passfläche bzw. der die zweite Passfläche ausbildende Abschnitt in Radialrichtung nach radialinnen über die benachbarten Abschnitte hervorsteht.

Wie bereits erwähnt, weist die Rotoraufnahme zwei Halteabschnitte auf, von welchen ein erster Halteabschnitt von einer ersten Seite entlang der Rotationsachse in das Rotorblechpaket einsteckbar ist und von welchen ein zweiter Halteabschnitt von einer gegenüberliegenden zweiten Seite entlang der Rotationsachse in das Rotorblechpaket einsteckbar ist. Dadurch kann das Durchgangsloch des Rotorblechpakets an seinen in Axialrichtung gegenüberliegenden Seiten jeweils von einem Halteabschnitt und der einen das Durchgangsloch durchlaufenden Welle verschlossen werden.

Entsprechend kann der erste Halteabschnitt ausgebildet sein, den durch das Durchgangsloch gebildeten Hohlraum zu der ersten Seite hin zu verschließen und vorzugsweise gegen ein Austreten eines beim Einspritzen flüssigen Kunststoffs abzudichten. Weiter kann der zweite Halteabschnitt ausgebildet sein, den durch das Durchgangsloch gebildeten Hohlraum zu der zweiten Seite hin zu verschließen und vorzugsweise gegen ein Austreten eines beim Einspritzen flüssigen Kunststoffs abzudichten. Der Hohlraum kann also an seinen beiden entlang der Rotationsachse gegenüberliegenden Seiten bzw. in Axialrichtung durch die Halteabschnitte und in Radialrichtung zu der Rotationsachse nach radialaußen durch das Rotorblechpaket abgeschlossen sein. Nach radialinnen wird der Hohlraum dabei vorzugsweise durch die den Hohlraum durchlaufende Welle begrenzt.

Gemäß einer ersten Variante der Erfindung ist vorgesehen, dass der erste Halteabschnitt und der zweite Halteabschnitt jeweils als eine in dem Spritzwerkzeug anordenbare, insbesondere hohlzylindrische Hülse ausgebildet sind. Ein solches Spritzgusswerkzeug weist vorzugsweise zwei Werkzeughälften auf, an welchen jeweils eine Hülse anordenbar ist. Die Werkzeughälften bestimme hierfür insbesondere jeweils eine zylindrische Aufnahme, in welchen jeweils eine Hülse einsteckbar ist.

Gemäß einer zweiten Variante der Erfindung ist vorgesehen, dass der erste Halteabschnitt integral und einstückig mit dem Spritzwerkzeug bzw. einer ersten Werkzeughälfte des Spritzgusswerkzeugs ausgebildet ist und der zweite Halteabschnitt als eine in dem Spritzwerkzeug bzw. in einer zweiten Werkzeughälfte des Spritzgusswerkzeugs anordenbare, insbesondere hohlzylindrische Hülse ausgebildet ist.

Unabhängig von den Varianten kann ein solches Spritzgusswerkzeug zudem vorzugsweise einen Aufnahmeraum zur Aufnahme des Blechpakets aufweisen, welcher auch gemeinsam durch dessen Werkzeughälften gebildet werden kann.

Ein weiterer Aspekt der Erfindung betrifft zudem ein System aus einer erfindungsgemäßen Rotoraufnahme und einem Rotorblechpaket, insbesondere für einen Innenläufermotor, wie es durch Anspruch 6 bestimmt ist. Die zwei Halteabschnitte zur Herstellung einer Verbindung einer Welle mit dem Rotorblechpaket sind dabei jeweils einseitig d.h. beidseitig des Rotorblechpakets entlang der Rotationsachse in das Rotorblechpaket einsteckbar. Das Rotorblechpaket weist eine Innenfläche auf, die zumindest abschnittsweise ein das Rotorblechpaket entlang der Rotationsachse durchlaufendes Durchgangsloch zur Aufnahme der Welle bestimmt. Das Durchgangsloch weist zum Toleranzausgleich in zumindest einem Abschnitt des Durchgangslochs, welcher an eine Stirnseite des Rotorblechpakets angrenzt und in welchem das Rotorblechpaket vorzugsweise an der ersten Passfläche anliegen kann, radiale Abflachungen auf, durch welche das Durchgangsloch in dem zumindest einem Abschnitt in Radialrichtung zur Anlage an die Hülse verengt ist. Die radialen Abflachungen können beim Einstecken der jeweiligen Hülse in den die Abflachungen aufweisenden Abschnitt des Durchgangslochs deformiert und dadurch ein Toleranzausgleich sowie ein sicherer Halt hergestellt werden.

Zur verbesserten Abdichtung kann auch vorgesehen sein, dass zwischen der Stirnseite zumindest eines der Halteabschnitte und einem entlang der Rotationsachse unmittelbar daran angrenzenden Bereich des Rotorblechpakets ein Dichtkörper vorgesehen ist, welcher eine Dichtung zwischen der Stirnseite des jeweiligen Halteabschnitts und dem Rotorblechpaket herstellt.

Weiter kann zumindest einer der Halteabschnitte angrenzend an die erste Passfläche einen sich nach radialaußen erstreckenden Anschlag aufweisen, welcher an dem Rotorblechpaket anliegen kann und eine Einstecktiefe des jeweiligen Halteabschnitts in das Rotorblechpaket begrenzen kann.

Die Innenfläche des Rotorblechpakets kann zumindest abschnittsweise das Durchgangsloch zur Aufnahme der Welle bestimmen. Alternativ kann die Innenfläche jedoch auch nach radialaußen versetzt zu dem Durchgangsloch vorgesehen sein.

Das Durchgangsloch kann entlang der Rotationsachse zudem mehrere Abschnitte aufweisen, welche jeweils einen sich unterscheidenden Durchmesser und/oder eine sich unterscheidende Querschnittsfläche aufweisen können.

Insbesondere kann ein erster Abschnitt die Innenfläche zur Anlage an die erste Passfläche zumindest einer der Halteabschnitte aufweisen oder von dieser gebildet sein. Weiter kann ein zweiter Abschnitt sich in Radialrichtung erstreckende Vertiefungen und/oder Vorsprünge zur Herstellung einer Verdrehsicherung aufweisen.

Zudem kann vorgesehen sein, dass der erste Abschnitt die Innenfläche zur Anlage an die erste Passfläche des ersten Halteabschnitts aufweist und ein dritter Abschnitt vorgesehen ist, welcher die Innenfläche zur Anlage an die erste Passfläche des zweiten Halteabschnitts aufweist oder von dieser gebildet wird. Der zweite Abschnitt kann dabei zwischen dem ersten und dem dritten Abschnitt angeordnet sein.

Weiter kann das System auch die Welle umfassen, welche das Durchgangsloch des Rotorblechpakets entlang der Rotationsachse durchlaufend in zumindest einem der Halteabschnitte anordenbar ist. Die Welle weist zudem in einem innerhalb des Rotorblechpakets anordenbaren Abschnitt sich in Radialrichtung erstreckende Vertiefungen und/oder Vorsprünge zur Herstellung einer Verdrehsicherung auf. Diese können beispielsweise durch eine Rändelung oder sich parallel der Rotationsachse erstreckende Riefen bzw. Nuten gebildet sein.

Die Vertiefungen und/oder Vorsprünge des Rotorblechpakets und die Vertiefungen und/oder Vorsprünge der Welle erstrecken sich entsprechend in einen Verbindungskörper, welcher durch Spritzgießen in dem Hohlraum gebildet werden kann. Weiter können sich die Vertiefungen und/oder Vorsprünge des Rotors und der Welle auch ineinander erstrecken bzw. zueinander alternierend angeordnet werden.

Zudem betrifft ein Aspekt der Erfindung ein Verfahren zur Herstellung einer erfindungsgemäßen Rotoraufnahme, wie es durch Anspruch 12 bestimmt ist. Für dieses und die damit verbundene Maßgenauigkeit ist von besonderer Bedeutung, dass der zumindest einer der Halteabschnitte in einem Drehverfahren hergestellt werden kann, wobei die Hülse oder das Spritzgusswerkzeug bzw. eine Werkzeuhälfte des Spritzgusswerkezugs in einen Werkzeughalter eingespannt und die erste Passfläche sowie die zweite Passfläche hergestellt wird, ohne die Hülse bzw. das Spritzgusswerkzeug aus dem Werkzeughalter auszuspannen. Alternativ ist jedoch insbesondere bei der Herstellung zumindest eines der Halteabschnitte an dem Spritzgusswerkzeug bzw. einer Werkzeughälfte des Spritzgusswerkzeugs ein anderes Verfahren und insbesondere ein Fräßverfahren einsetzbar.

Neben dem Verfahren zur Herstellung der Rotoraufnahme betrifft zudem ein Aspekt der Erfindung ein Verfahren zur Herstellung einer Verbindung einer Welle mit einem Rotorblechpaket mit einer erfindungsgemäßen Rotoraufnahme mit zwei Halteabschnitten, wie es durch Anspruch 13 bestimmt ist. Der erste Halteabschnitt wird von einer ersten Seite und der zweite Halteabschnitt von einer gegenüberliegenden zweiten Seite entlang der Rotationsachse in ein Durchgangsloch des Rotorblechpakets eingesteckt. Das Durchgangloch durchläuft das Rotorblechpaket entlang der Rotationsachse. Vorzugsweise vor alternativ aber auch nach dem Einstecken des ersten und/oder zweiten Halteabschnitts in das Rotorblechpaket wird die Welle in den ersten und/oder den zweiten Halteabschnitt eingesteckt, sodass die Welle das Rotorblechpaket entlang der Rotationsachse von dem ersten Halteabschnitt zu dem zweiten Halteabschnitt durchläuft. Der erste Halteabschnitt und der zweite Halteabschnitt sind über die jeweils erste Passfläche zu dem Rotorblechpaket und über die jeweils zweite Passfläche zu der Welle abgedichtet. Ferner wird die Welle durch die beiden Halteabschnitte konzentrisch zu der Rotationsachse in dem Rotorblechpaket bzw. dieses durchlaufend gehalten, sodass in dem Rotorblechpaket ein entlang der Rotationsachse von dem ersten Halteabschnitt und dem zweiten Halteabschnitt und in Radialrichtung von dem Rotorblechpaket und der Welle begrenzter Hohlraum gebildet wird. Anschließend wird in dem Hohlraum ein flüssiges Material, insbesondere Kunststoff, eingespritzt, welches in dem Hohlraum formfest zu einem die Welle verdrehsicher mit dem Rotorblechpaket verbindenden Verbindungskörper erstarrt bzw. aushärtet. Anschließend können der erste und der zweite Halteabschnitt von dem Rotorblechpaket entfernt werden.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein in eine Rotoraufnahme eingespanntes Rotorblechpaket;
- Fig. 2: das Rotorblechpaket gemäß Figur 1;
- Fig. 3: ein Spritzwerkzeug mit einer durch zwei Hülsen gebildeten Rotoraufnahme;
- Fig. 4: ein nicht erfindungsgemäßes Spritzwerkzeug mit einer integral durch die Werkzeughälften des Spritzwerkzeugs gebildeten Rotoraufnahme.

Die Figuren sind beispielhaft schematisch. Gleiche Bezugszeichen in den Figuren weisen auf gleiche funktionale und/oder strukturelle Merkmale hin.

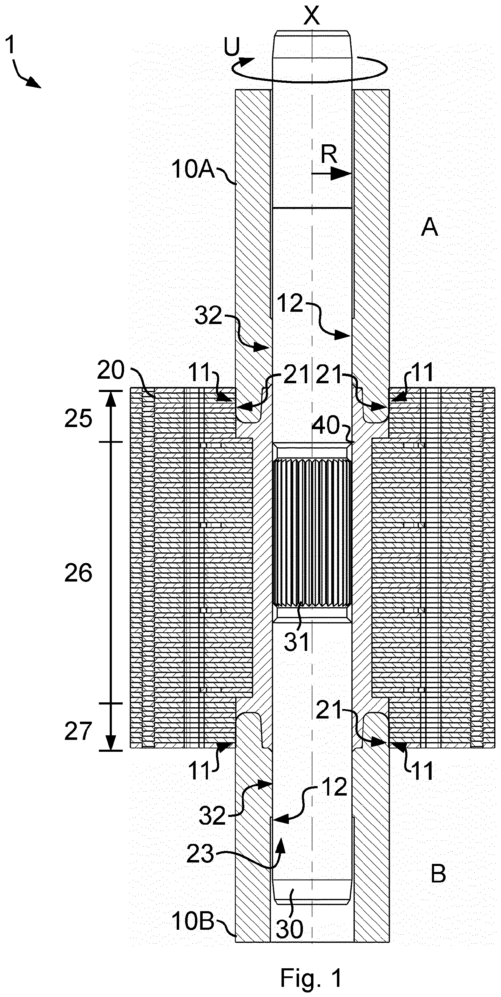

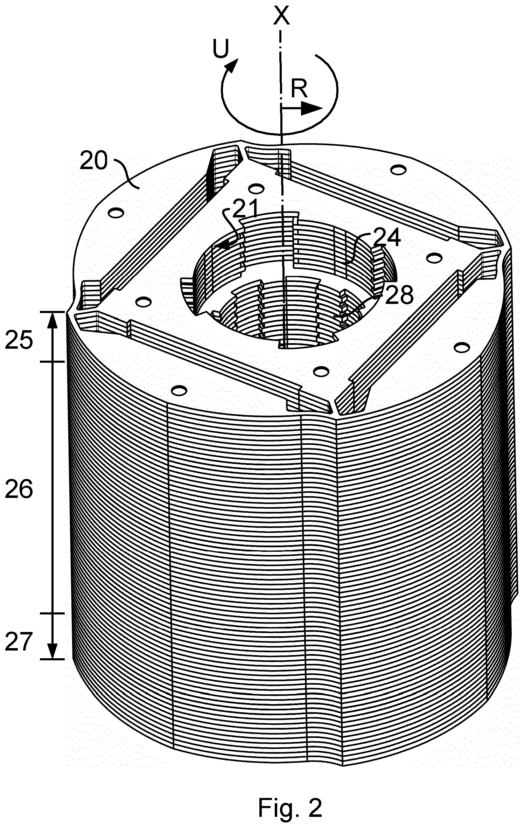

Bei dem in Figur 2 dargestellten Rotor 20 handelt es sich um den Rotor 20, wie er in den Figuren 1, 3 und 4 dargestellt ist, sodass die zugehörige Beschreibung übertragbar ist bzw. gleichermaßen gilt.

Figur 1 zeigt eine Rotoraufnahme 1 für ein Spritzwerkzeug zur Herstellung einer Welle-Rotor-Verbindung bzw. einer Verbindung von Welle 30 mit dem Rotorblechpaket 20. Hierfür weist die Rotoraufnahme 1 zwei Hülsen 10A, 10B auf, wobei eine erste Hülse 10A von einer ersten Seite A des Rotorblechpakets 20 und eine zweite Hülse 10B von einer zweiten Seite B des Rotorblechpakets 20 entlang der Rotationsachse X bzw. in Axialrichtung in das Rotorblechpaket 20 eingesteckt sind.

Die Hülsen 10A, 10B weisen hierfür jeweils erste Passflächen 11 auf, welche nach radialaußen dicht an einer radialinneren Fläche bzw. einer jeweiligen Innenfläche 21 des Rotorblechpakets 20 anliegen und zu dieser abdichten. Auch die Innenfläche 21 des Rotorblechpakets 20 kann als Passfläche ausgebildet sein. Vorliegend weist diese jedoch eine Vielzahl von in Umfangsrichtung U um die Rotationsachse X verteilte Abflachungen 24 auf, welche beim Einstecken der jeweiligen Hülse 10A, 10B zum Toleranzausgleich deformiert werden, sodass das Rotorblechpaket 20 konzentrisch durch die Hülsen 10A, 10B gehalten wird.

Noch vor dem Einstecken beider Hülsen 10A, 10B in das Rotorblechpaket 20 wird in eine der Hülsen 10A, 10B die Welle 30 eingesteckt, welche an der entsprechenden Hülse 10A, 10B durch ein Zusammenwirken der zweiten Passfläche 12 der Hülse 10A, 10B und der Außenfläche 32 der Welle 30 konzentrisch von der Hülse 10A, 10B gehalten wird.

Werden nun die Hülsen 10A, 10B in das Rotorblechpaket 20 eingesteckt, wird zugleich auch die Welle 30 das Rotorblechpaket 20 konzentrisch durchlaufend in diesem angeordnet.

Da die Welle 30 einen kleineren Außendurchmesser aufweist als der Innendurchmesser des Durchgangslochs 23, welcher das Rotorblechpaket 20 durchläuft, verbleibt in dem Rotorblechpaket 20 ein Hohlraum, welcher nach radialaußen von dem Rotorblechpaket 20 selbst und nach radialinnen von der Welle 30 begrenzt ist. Entlang der Rotationsachse X dichten die Hülsen 10A, 10B ab, sodass der Hohlraum entlang der Rotationsachse X bzw. in Axialrichtung durch die Hülsen 10A, 10B verschlossen ist.

Die Welle 30 wird durch die Hülsen 10A, 10B also konzentrisch zu der Rotationsachse X in dem Rotorblechpaket 20 und das Rotorblechpaket 20 vorzugsweise ausschließlich an der Innenfläche 21 bzw. den Innenflächen 21 konzentrisch zu der Rotationsachse X gehalten, wobei in dem Rotorblechpaket 20 ein Hohlraum verbleibt.

In diesen Hohlraum wird durch einen nicht dargestellten Kanal ein flüssiges Material, insbesondere ein flüssiger Kunststoff eingespritzt der in dem Hohlraum aushärtet und dadurch den Verbindungskörper 40 bildet, welcher Rotorblechpaket 20 und Welle 30 konzentrisch zueinander bzw. zu der Rotationsachse X drehfest verbindet.

Zur Herstellung der drehfesten Verbindung können an der Welle 30 die beispielsweise durch eine Rändelung gebildeten Vorsprünge 31 und an dem Rotorblechpaket 20 die Vorsprünge 28 vorgesehen sein.

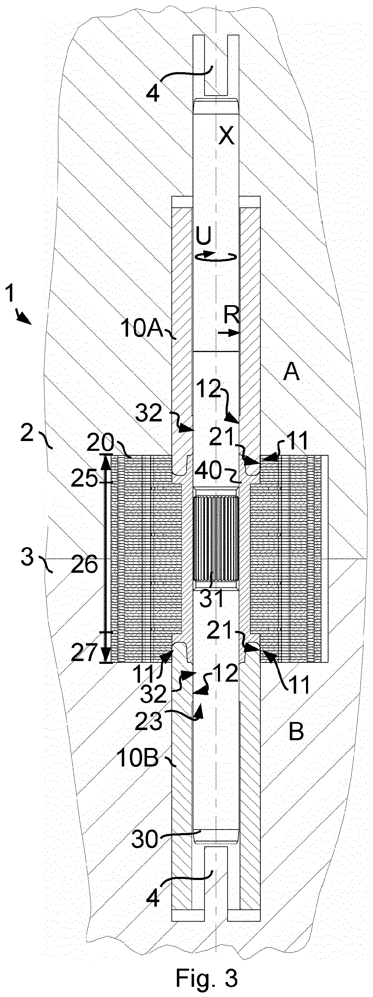

In Figur 3 ist eine Rotoraufnahme mit zwei Hülsen 10A, 10B gemäß Figur 1 dargestellt, sodass die zugehörige Beschreibung auf Figur 3 übertragbar ist. Weiter ist in Figur 3 das aus zwei Werkzeughälften 2, 3 gebildete Spritzgusswerkzeug dargestellt. Jede der Werkzeughälften bildet eine Aufnahme aus, in welcher jeweils eine der Hülsen 10A, 10B angeordnet ist.

Vorteilhaft hieran ist, dass die Hülsen 10A, 10B bei Bedarf ausgetauscht werden können. Hierzu weißen die Hülsenaufnahmen an ihrer Innenfläche jeweils eine zu der Außenfläche der Hülse korrespondierende Passung auf.

Zur Positionierung der Welle 20 in dem Rotorblechpaket kann zumindest eine der Werkzeughälften 2, 3 zudem einen sich entlang der Rotationsachse X und bei Bedarf in die jeweilige Hülse 10A, 10B erstreckenden Dorn 4 aufweisen, durch welchen die Welle 20 in einer vorbestimmten Position anordenbar ist.

Die beiden Werkzeughälften 2, 3 können zudem gemeinsam einen Aufnahmeraum zur Aufnahme des Rotorblechpakets 20 bilden, durch welchen die Teilungsebene der Werkzeughälften 2, 3 verlaufen kann. Da das Rotorblechpaket 20 gerade nicht an seinem Außenumfang gehalten wird, kann der Aufnahmeraum zur Aufnahme des Rotorblechpakets 20 insbesondere in Radialrichtung größer als das Rotorblechpaket 20 sein.

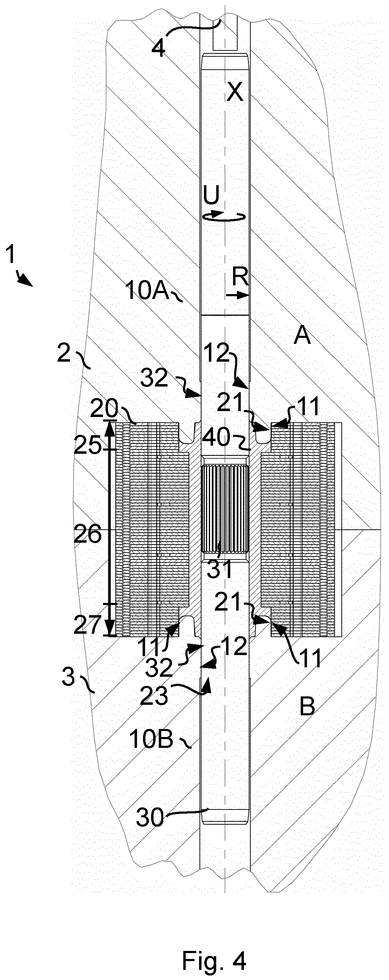

Figur 4 zeigt eine nicht erfindungsgemäße Variante analog zu Figur 3, wobei die Halteabschnitte 10A, 10B nicht durch Hülsen gebildet werden, sondern der erste Halteabschnitt 10A integral durch die erste Werkzeughälfte 2 und der zweite Halteabschnitt 10B integral durch die zweite Werkzeughälfte 3 gebildet sind.

## Patentansprüche

1. Rotoraufnahme (1) für ein Spritzwerkzeug zur Herstellung einer Verbindung einer Welle (30) mit einem Rotorblechpaket (20), welches entlang seiner Rotationsachse (X) ein Durchgangsloch (23) zur Aufnahme der Welle (30) bestimmt,
wobei die Rotoraufnahme (1) zwei Halteabschnitte (10A, 10B) aufweist,
wobei zumindest einer der Halteabschnitte (10A, 10B) ein freies Ende mit einer radialäußeren erste Passfläche (11) aufweist, welche ausgebildet ist, zu einer Innenfläche (21) des Rotorblechpakets (20) zu korrespondieren,
wobei zumindest einer der Halteabschnitte (10A, 10B) ausgebildet ist, konzentrisch zu der Rotationsachse (X) in das Rotorblechpaket (20) eingesteckt zu werden und das Rotorblechpaket (20) über die erste Passfläche (11) konzentrisch zu der Rotationsachse (X) zu halten,
wobei zumindest einer der Halteabschnitte (10A, 10B) einen Aufnahmeraum zur Aufnahme der Welle (30) ausbildet und in dem Aufnahmeraum eine radialinnere zweite Passfläche (12) aufweist, welche ausgebildet ist, zu einer Außenfläche (32) der Welle (30) zu korrespondieren,
wobei zumindest einer der Halteabschnitte (10A, 10B) ausgebildet ist, die Welle (30) an der zweiten Passfläche (12) konzentrisch zu der Rotationsachse (X) und sich zumindest abschnittsweise in das Rotorblechpaket (20) erstreckend zu halten,
wobei zumindest einer der Halteabschnitte (10A, 10B) ausgebildet ist, das das Rotorblechpaket (20) durchlaufende Durchgangsloch (23) abschnittsweise zu verschließen und einen in dem Rotorblechpaket (20) durch das Durchgangsloch (23) gebildeten Hohlraum zu begrenzen,
**dadurch gekennzeichnet, dass**
ein erster Halteabschnitt (10A) der zwei Halteabschnitte (10A, 10B) ausgebildet ist, von einer ersten Seite (A) entlang der Rotationsachse (X) in das Rotorblechpaket (20) einsteckbar zu sein, und
ein zweiter Halteabschnitt (10B) der zwei Halteabschnitte (10A, 10B) ausgebildet ist, von einer gegenüberliegenden zweiten Seite (B) entlang der Rotationsachse (X) in das Rotorblechpaket (20) einsteckbar zu sein,
und wobei der erste Halteabschnitt (10A) und der zweite Halteabschnitt (10B) jeweils als eine in dem Spritzwerkzeug (2, 3) anordenbare Hülse ausgebildet sind oder
der erste Halteabschnitt (10A) integral und einstückig mit dem Spritzwerkzeug (2, 3) ausgebildet ist und der zweite Halteabschnitt (10B) als eine in dem Spritzwerkzeug (2, 3) anordenbare Hülse ausgebildet ist.

2. Rotoraufnahme nach Anspruch 1,
wobei zumindest einer der Halteabschnitte (10A, 10B) einen Kanal zum Einspritzen eines Kunststoffs in den Hohlraum ausbildet.

3. Rotoraufnahme nach Anspruch 1 oder 2,
wobei die erste Passfläche (11) einen unmittelbar an eine Stirnseite zumindest eines der Halteabschnitte (10A, 10B) angrenzenden Abschnitt einer Außenfläche des Halteabschnitts (10A, 10B) bestimmt,
und/oder wobei die zweite Passfläche (12) in Längsrichtung einseitig oder beidseitig von abgesetzten Innenflächen zumindest eines der Halteabschnitte (10A, 10B) benachbart ist.

4. Rotoraufnahme nach einem der vorhergehenden Ansprüche,
wobei der erste Halteabschnitt (10A) ausgebildet ist, den durch das Durchgangsloch (23) gebildeten Hohlraum zu der ersten Seite (A) hin zu verschließen, und der zweite Halteabschnitt (10B) ausgebildet ist, den durch das Durchgangsloch (23) gebildeten Hohlraum zu der zweiten Seite (B) hin zu verschließen, sodass der Hohlraum entlang der Rotationsachse (X) durch die zwei Halteabschnitte (10A, 10B) und in Radialrichtung (R) durch das Rotorblechpaket (20) abgeschlossen ist.

5. Rotoraufnahme nach einem der vorhergehenden Ansprüche,
wobei der erste Halteabschnitt (10A) und der zweite Halteabschnitt (10B) jeweils als die in dem Spritzwerkzeug (2, 3) anordenbare Hülse ausgebildet sind und die Hülsen jeweils hohlzylindrisch ausgebildet sind oder
wobei der erste Halteabschnitt (10A) integral und einstückig mit dem Spritzwerkzeug (2, 3) ausgebildet ist und der zweite Halteabschnitt (10B) als die in dem Spritzwerkzeug (2, 3) anordenbare Hülse ausgebildet ist und die Hülse hohlzylindrisch ist.

6. System aus einer Rotoraufnahme (1) gemäß einem der vorhergehenden Ansprüche und einem Rotorblechpaket (20),
wobei die zwei Halteabschnitte (10A, 10B) zur Herstellung einer Verbindung einer Welle (30) mit dem Rotorblechpaket (20) beidseitig des Rotorblechpakets (20) entlang der Rotationsachse (X) in das Rotorblechpaket (20) einsteckbar sind,
wobei das Rotorblechpakete (20) eine Innenfläche (21) und ein das Rotorblechpaket (20) entlang der Rotationsachse (X) durchlaufendes Durchgangsloch (23) zur Aufnahme der Welle (30) bestimmt,
wobei das Durchgangsloch (23) in zumindest einem Abschnitt (25) des Durchgangslochs (23), welcher an eine Stirnseite des Rotorblechpakets (20) angrenzt, radiale Abflachungen (24) aufweist, durch welche das Durchgangsloch (23) in dem zumindest einem Abschnitt (25) in Radialrichtung (R) zur Anlage an einen der Halteabschnitte (10A, 10B) verengt ist.

7. System nach dem vorhergehenden Anspruch,
wobei die Innenfläche (21) des Rotorblechpakets (20) zumindest abschnittsweise das Durchgangsloch (23) zur Aufnahme der Welle (30) bestimmt.

8. System nach einem der beiden vorhergehenden Ansprüchen,
wobei das Durchgangsloch (23) entlang der Rotationsachse (X) mehrere Abschnitte aufweist, welche jeweils einen sich unterscheidenden Durchmesser und/oder eine sich unterscheidende Querschnittsfläche aufweisen.

9. System nach dem vorhergehenden Anspruch,
wobei ein erster Abschnitt (25) die Innenfläche (21) zur Anlage an die erste Passfläche (11) eines der Halteabschnitte (10A, 10B) aufweist oder von dieser gebildet wird,
und wobei ein zweiter Abschnitt (26) sich in Radialrichtung (R) erstreckende Vertiefungen und/oder Vorsprünge (28) zur Herstellung einer Verdrehsicherung aufweist.

10. System nach dem vorhergehenden Anspruch,
wobei der erste Abschnitt (25) die Innenfläche (21) zur Anlage an die erste Passfläche (11) des ersten Halteabschnitts (10A, 10B) aufweist
und ein dritter Abschnitt (27) vorgesehen ist, welcher die Innenfläche (21) zur Anlage an die erste Passfläche (11) des zweiten Halteabschnitts (10A, 10B) aufweist oder von dieser gebildet wird.

11. System nach einem der vorhergehenden Ansprüche 6 bis 10,
aufweisend die Welle (30), welche das Durchgangsloch (23) des Rotorblechpakets (20) entlang der Rotationsachse (X) durchlaufend anordenbar ist,
wobei die Welle (30) an einem innerhalb des Rotorblechpakets (20) anordenbaren Abschnitt sich in Radialrichtung (R) erstreckende Vertiefungen und/oder Vorsprünge (31) zur Herstellung einer Verdrehsicherung aufweist.

12. Verfahren zur Herstellung einer Rotoraufnahme nach Anspruch 1,
wobei zumindest einer der Halteabschnitte (10A, 10B) in einem Drehverfahren hergestellt wird,
wobei die Hülse oder das Spritzgusswerkzeug (2, 3) in einen Werkzeughalter eingespannt und die erste Passfläche (11) sowie die zweite Passfläche (12) hergestellt wird, ohne die Hülse oder das Spritzgusswerkzeug (2, 3) aus dem Werkzeughalter auszuspannen.

13. Verfahren zur Herstellung einer Verbindung einer Welle (30) mit einem Rotorblechpaket (20) mit einer Rotoraufnahme nach einem der Ansprüche 1 bis 5,
wobei der erste Halteabschnitt (10A) von einer ersten Seite (A) und der zweite Halteabschnitt (10B) von einer gegenüberliegenden zweiten Seite (B) entlang der Rotationsachse (X) in ein Durchgangsloch (23) des Rotorblechpakets (20) eingesteckt wird, welches das Rotorblechpaket (20) entlang der Rotationsachse (X) durchläuft,
wobei vor oder nach dem Einstecken des ersten und/oder zweiten Halteabschnitts (10A, 10B) in das Rotorblechpaket (20) die Welle (30) in den ersten und/oder zweiten Halteabschnitt (10A, 10B) eingesteckt wird, sodass die Welle (30) das Rotorblechpaket (20) konzentrisch der Rotationsachse (X) von dem ersten Halteabschnitt (10A) zu dem zweiten Halteabschnitt (10B) durchläuft,
wobei der erste Halteabschnitt (10A) und der zweite Halteabschnitt (10B) über die jeweils erste Passfläche (11) zu dem Rotorblechpaket (20) und über die jeweils zweite Passfläche (12) zu der Welle (30) abgedichtet sind und die Welle (30) konzentrisch zu der Rotationsachse (X) in dem Rotorblechpaket (20) halten, sodass in dem Rotorblechpaket (20) ein entlang der Rotationsachse (X) von dem ersten Halteabschnitt (10A) und dem zweiten Halteabschnitt (10B) und in Radialrichtung (R) von dem Rotorblechpaket (20) und der Welle (30) begrenzter Hohlraum gebildet wird,
wobei in dem Hohlraum ein flüssiges Material eingespritzt wird, welches in dem Hohlraum formfest zu einem die Welle (30) verdrehfest mit dem Rotorblechpaket (20) verbindenden Verbindungskörper (40) erstarrt.

## Claims

1. A rotor holder (1) for an injection moulding die for producing a connection of a shaft (30) to a laminated rotor core (20), which defines a through hole (23) along its axis of rotation (X) for receiving the shaft (30),
wherein the rotor holder (1) has two holding sections (10A, 10B),
wherein at least one of the holding sections (10A, 10B) has a free end with a radially outer first mating surface (11), which is configured to correspond to an inner surface (21) of the laminated rotor core (20),
wherein at least one of the holding sections (10A, 10B) is configured to be inserted into the laminated rotor core (20) concentrically to the axis of rotation (X) and to hold the laminated rotor core (20) via the first mating surface (11) concentrically to the axis of rotation (X),
wherein at least one of the holding sections (10A, 10B) forms a receiving space for receiving the shaft (30) and has a radially inner second mating surface (12) in the receiving space, which is configured to correspond to an outer surface (32) of the shaft (30),
wherein at least one of the holding sections (10A, 10B) is configured to hold the shaft (30) on the second mating surface (12) concentrically to the axis of rotation (X) and to hold itself extending at least partially into the laminated rotor core (20),
wherein at least one of the holding sections (10A, 10B) is configured to partially close the through hole (23) passing through the laminated rotor core (20) and to delimit a cavity formed in the laminated rotor core (20) by the through hole (23),
**characterised in that**
a first holding section (10A) of the two holding sections (10A, 10B) is configured to be insertable into the laminated rotor core (20) from a first side (A) along the axis of rotation (X), and
a second holding section (10B) of the two holding sections (10A, 10B) is configured to be insertable into the laminated rotor core (20) from an opposite second side (B) along the axis of rotation (X),
and wherein the first holding section (10A) and the second holding section (10B) are each formed as a sleeve arrangeable in the injection moulding die (2, 3), or
the first holding section (10A) is formed integrally and in one piece with the injection moulding die (2, 3) and the second holding section (10B) is formed as a sleeve arrangeable in the injection moulding die (2, 3).

2. The rotor holder according to claim 1,
wherein at least one of the holding sections (10A, 10B) forms a passage for injecting a plastic material into the cavity.

3. The rotor holder according to claim 1 or 2,
wherein the first mating surface (11) defines a section of an outer surface of the holding section (10A, 10B) directly adjoining an end face of at least one of the holding sections (10A, 10B),
and/or wherein the second mating surface (12) is adjacent in the longitudinal direction on one or both sides of recessed inner surfaces of at least one of the holding sections (10A, 10B).

4. The rotor holder according to any one of the preceding claims,
wherein the first holding section (10A) is configured to close the cavity formed by the through hole (23) towards the first side (A), and the second holding section (10B) is configured to close the cavity formed by the through hole (23) towards the second side (B), so that the cavity is enclosed by the two holding sections (10A, 10B) along the axis of rotation (X) and by the laminated rotor core (20) in the radial direction (R).

5. The rotor holder according to any one of the preceding claims,
wherein the first holding section (10A) and the second holding section (10B) are each formed as a sleeve arrangeable in the injection moulding die (2, 3), and the sleeves are each formed to be hollow-cylindrical, or
wherein the first holding section (10A) is formed integrally or in one piece with the injection moulding die (2, 3), and the second holding section (10B) is formed as the sleeve arrangeable in the injection moulding die (2, 3), and the sleeve is hollow-cylindrical.

6. A system, comprising a rotor holder (1) according to any one of the preceding claims and a laminated rotor core (20),
wherein the two holding sections (10A, 10B) for producing a connection of a shaft (30) to the laminated rotor core (20) are insertable into the laminated rotor core (20) on both sides of the laminated rotor core (20) along the axis of rotation (X),
wherein the laminated rotor core (20) defines an inner surface (21) and a through hole (23) for receiving the shaft (30) passing through the laminated rotor core (20) along the axis of rotation (X),
wherein the through hole (23) has, in at least one section (25) of the through hole (23) adjoining an end face of the laminated rotor core (20), radial flat portions (24) by which the through hole (23) is constricted in the at least one section (25) in the radial direction (R) for abutment to one of the holding sections (10A, 10B).

7. The system according to the preceding claim,
wherein the inner surface (21) of the laminated rotor core (20) at least partially defines the through hole (23) for receiving the shaft (30).

8. The system according to any one of the two preceding claims,
wherein the through hole (23) has multiple sections along the axis of rotation (X), each having a differing diameter and/or a differing cross-sectional area.

9. The system according to the preceding claim,
wherein a first section (25) has or is formed by the inner surface (21) for abutment to the first mating surface (11) of one of the holding sections (10A, 10B),
and wherein a second section (26) has recesses and/or projections (28) extending in the radial direction (R) for producing an anti-twist device.

10. The system according to the preceding claim,
wherein the first section (25) has the inner surface (21) for abutment to the first mating surface (11) of the first holding section (10A, 10B),
and a third section (27) is provided which has or is formed by the inner surface (21) for abutment to the first mating surface (11) of the second holding section (10A, 10B).

11. The system according to any one of the preceding claims 6 to 10,
having the shaft (30) which is arrangeable to pass through the through hole (23) of the laminated rotor core (20) along the axis of rotation (X),
wherein the shaft (30) has recesses and/or projections (31) extending in the radial direction (R) for producing an anti-twist device on a section arrangeable within the laminated rotor core (20).

12. A method for producing a rotor holder according to claim 1,
wherein at least one of the holding sections (10A, 10B) is produced in a turning process,
wherein the sleeve or the injection moulding die (2, 3) is clamped in a die holder and the first mating surface (11) and the second mating surface (12) are produced without unclamping the sleeve or the injection moulding die (2, 3) from the die holder.

13. A method for producing a connection of a shaft (30) to a laminated rotor core (20), having a rotor holder according to any one of claims 1 to 5,
wherein the first holding section (10A) is inserted from a first side (A) and the second holding section (10B) is inserted from an opposite second side (B) along the axis of rotation (X) into a through hole (23) of the laminated rotor core (20), passing through the laminated rotor core (20) along the axis of rotation (X),
wherein, before or after inserting the first and/or second holding section (10A, 10B) into the laminated rotor core (20), the shaft (30) is inserted into the first and/or second holding section (10A, 10B) such that the shaft (30) of the laminated rotor core (20) passes from the first holding section (10A) to the second holding section (10B) concentrically to the axis of rotation (X),
wherein the first holding section (10A) and the second holding section (10B) are sealed towards the laminated rotor core (20) via the respective first mating surface (11) and are sealed towards the shaft (30) via the respective second mating surface (12), and the shaft (30) is held concentrically to the axis of rotation (X) in the laminated rotor core (20), so that, in the laminated rotor core (20), a cavity is formed delimited by the first holding section (10A) and the second holding section (10B) along the axis of rotation (X) and by the laminated rotor core (20) and the shaft (30) in the radial direction (R),
wherein a liquid material is injected in the cavity, which solidifies in the cavity in a dimensionally stable manner to form a connection body (40) connecting the shaft (30) to the laminated rotor core (20) in an anti-twist manner.

## Revendications

1. Logement de rotor (1) pour un outil de moulage par injection pour établir une liaison d'un arbre (30) avec un paquet de tôles de rotor (20), qui définit un trou traversant (23) le long de son axe de rotation (X) pour recevoir l'arbre (30),
dans lequel le logement de rotor (1) comporte deux sections de maintien (10A, 10B),
dans lequel au moins une des sections de maintien (10A, 10B) présente une extrémité libre avec une première surface d'accouplement (11) radialement extérieure qui est conçue pour correspondre à une surface intérieure (21) du paquet de tôles de rotor (20),
dans lequel au moins une des sections de maintien (10A, 10B) est conçue pour être insérée dans le paquet de tôles de rotor (20) concentriquement à l'axe de rotation (X) et pour maintenir le paquet de tôles de rotor (20) concentriquement à l'axe de rotation (X) par l'intermédiaire de la première surface d'accouplement (11),
dans lequel au moins une des sections de maintien (10A, 10B) forme un espace de réception pour recevoir l'arbre (30) et présente dans l'espace de réception une seconde surface d'ajustement radialement intérieure (12) qui est conçue pour correspondre à une surface extérieure (32) de l'arbre (30),
dans lequel au moins une des sections de maintien (10A, 10B) est conçue pour maintenir l'arbre (30) sur la seconde surface d'accouplement (12) concentriquement à l'axe de rotation (X) et s'étendant au moins partiellement dans le paquet de tôles de rotor (20),
dans lequel au moins une des sections de maintien (10A, 10B) est conçue pour fermer partiellement le trou traversant (23) traversant le paquet de tôles de rotor (20) et pour délimiter une cavité formée dans le paquet de tôles de rotor (20) par le trou traversant (23),
**caractérisé en ce que**
une première section de maintien (10A) des deux sections de maintien (10A, 10B) est conçue pour pouvoir être insérée dans le paquet de tôles de rotor (20) à partir d'un premier côté (A) le long de l'axe de rotation (X), et
une seconde section de maintien (10B) des deux sections de maintien (10A, 10B) est conçue pour pouvoir être insérée dans le paquet de tôles de rotor (20) à partir d'un second côté opposé (B) le long de l'axe de rotation (X),
et dans lequel la première partie de maintien (10A) et la seconde partie de maintien (10B) sont chacune conçues comme un manchon qui peut être disposé dans l'outil de moulage par injection (2, 3) ou
la première partie de maintien (10A) est formée d'un seul tenant et d'une seule pièce avec l'outil de moulage par injection (2, 3) et la seconde partie de maintien (10B) est formée sous la forme d'un manchon qui peut être disposé dans l'outil de moulage par injection (2, 3).

2. Logement de rotor selon la revendication 1,
dans lequel au moins une des sections de maintien (10A, 10B) forme un canal pour injecter un plastique dans la cavité.

3. Logement de rotor selon la revendication 1 ou 2,
dans lequel la première surface d'accouplement (11) définit une partie d'une surface extérieure de la section de maintien (10A, 10B) directement adjacente à une face d'extrémité d'au moins une des sections de maintien (10A, 10B), et/ou
dans lequel la seconde surface de montage (12) est adjacente dans la direction longitudinale sur un côté ou sur les deux côtés pour décaler les surfaces intérieures d'au moins une des sections de maintien (10A, 10B).

4. Logement de rotor selon l'une quelconque des revendications précédentes,
dans lequel la première section de maintien (10A) est conçue pour fermer la cavité formée par le trou traversant (23) vers le premier côté (A), et la seconde section de maintien (10B) est conçue pour fermer la cavité formée par le trou traversant (23) vers le second côté (B), de sorte que la cavité est fermée le long de l'axe de rotation (X) par les deux sections de maintien (10A, 10B) et dans la direction radiale (R) par le paquet de tôles de rotor (20).

5. Logement de rotor selon l'une quelconque des revendications précédentes,
dans lequel la première section de maintien (10A) et la seconde section de maintien (10B) sont chacune conçues comme le manchon qui peut être disposé dans l'outil de moulage par injection (2, 3) et les manchons sont chacun conçus comme un cylindre creux ou
dans lequel la première section de maintien (10A) est conçue de manière solidaire et d'un seul tenant avec l'outil de moulage par injection (2, 3) et la seconde section de maintien (10B) est conçue comme le manchon qui peut être disposé dans l'outil de moulage par injection (2, 3) et le manchon est cylindrique creux.

6. Système comprenant un logement de rotor (1) selon l'une quelconque des revendications précédentes et un paquet de tôles de rotor (20),
dans lequel les deux sections de maintien (10A, 10B) pour établir une connexion d'un arbre (30) au paquet de tôles de rotor (20) peuvent être insérées dans le paquet de tôles de rotor (20) des deux côtés du paquet de tôles de rotor (20) le long de l'axe de rotation (X),
dans lequel le paquet de tôles de rotor (20) définit une surface intérieure (21) et un trou traversant (23) traversant le paquet de tôles de rotor (20) le long de l'axe de rotation (X) pour recevoir l'arbre (30),
dans lequel le trou traversant (23) dans au moins une section (25) du trou traversant (23), qui jouxte une face d'extrémité du paquet de tôles de rotor (20), présente des aplatissements radiaux (24) à travers lesquels le trou traversant (23) dans l'au moins une section (25) est rétréci dans la direction radiale (R) pour venir en butée contre l'une des sections de maintien (10A, 10B).

7. Système selon la revendication précédente,
dans lequel la surface intérieure (21) du paquet de tôles de rotor (20) définit au moins partiellement le trou traversant (23) destiné à recevoir l'arbre (30).

8. Système selon l'une des deux revendications précédentes,
dans lequel le trou traversant (23) présente une pluralité de sections le long de l'axe de rotation (X), chacune d'entre elles présentant un diamètre différent et/ou une section transversale différente.

9. Système selon la revendication précédente,
dans lequel une première partie (25) présente une surface intérieure (21) destinée à venir en contact avec la première surface d'accouplement (11) d'une des parties de maintien (10A, 10B) ou est formée par celle-ci, et
dans lequel une seconde partie (26) présente des évidements et/ou des saillies (28) s'étendant dans la direction radiale (R) pour produire un dispositif anti-torsion.

10. Système selon la revendication précédente,
dans lequel la première partie (25) présente la surface intérieure (21) destinée à venir en butée contre la première surface d'accouplement (11) de la première partie de maintien (10A, 10B) et
une troisième partie (27) est prévue, laquelle présente une surface intérieure (21) destinée à venir en butée contre la première surface d'accouplement (11) de la seconde partie de maintien (10A, 10B) ou est formée par celle-ci.

11. Système selon l'une des revendications précédentes 6 à 10,
comprenant l'arbre (30) qui peut être agencé pour passer à travers le trou traversant (23) du paquet de tôles de rotor (20) le long de l'axe de rotation (X),
dans lequel l'arbre (30) présente, sur une section pouvant être disposée à l'intérieur du paquet de tôles de rotor (20), des évidements et/ou des saillies (31) s'étendant dans la direction radiale (R) pour produire un dispositif anti-torsion.

12. Procédé de fabrication d'un logement de rotor selon la revendication 1,
dans lequel au moins une des sections de maintien (10A, 10B) est produite dans un processus de tournage,
dans lequel le manchon ou l'outil de moulage par injection (2, 3) est serré dans un porte-outil et la première surface d'accouplement (11) et la seconde surface d'accouplement (12) sont produites sans desserrer le manchon ou l'outil de moulage par injection (2, 3) du porte-outil.

13. Procédé de réalisation d'une liaison d'un arbre (30) à un paquet de tôles de rotor (20) avec un logement de rotor selon l'une des revendications 1 à 5,
dans lequel la première section de maintien (10A) est insérée depuis un premier côté (A) et la seconde section de maintien (10B) depuis un second côté opposé (B) le long de l'axe de rotation (X) dans un trou traversant (23) du paquet de tôles de rotor (20), qui traverse le paquet de tôles de rotor (20) le long de l'axe de rotation (X),
dans lequel, avant ou après l'insertion de la première et/ou de la seconde section de maintien (10A, 10B) dans le paquet de tôles de rotor (20), l'arbre (30) est inséré dans la première et/ou la seconde section de maintien (10A, 10B), de sorte que l'arbre (30) traverse le paquet de tôles de rotor (20) concentriquement à l'axe de rotation (X) de la première section de maintien (10A) à la seconde section de maintien (10B),
dans lequel la première section de maintien (10A) et la seconde section de maintien (10B) sont scellées par l'intermédiaire de la première surface d'accouplement (11) respective au paquet de tôles de rotor (20) et par l'intermédiaire de la seconde surface d'accouplement (12) respective à l'arbre (30) et maintiennent l'arbre (30) concentriquement à l'axe de rotation (X) dans le paquet de tôles de rotor (20), de sorte qu'une cavité est formée dans le paquet de tôles de rotor (20) qui est délimitée le long de l'axe de rotation (X) par la première section de maintien (10A) et la seconde section de maintien (10B) et dans la direction radiale (R) par le paquet de tôles de rotor (20) et l'arbre (30),
dans lequel un matériau liquide est injecté dans la cavité et se solidifie dans la cavité pour former un corps de connexion (40) qui relie l'arbre (30) au paquet de tôles de rotor (20) de manière fixe en rotation.
